(19) Europäisches Patentamt / European Patent Office / Office européen des brevets

(11) EP 4 390 976 A1

# (12) EUROPEAN PATENT APPLICATION

(43) Date of publication:
**26.06.2024 Bulletin 2024/26**

(21) Application number: **22307031.9**

(22) Date of filing: **23.12.2022**

(51) International Patent Classification (IPC):
***H01B 3/44*** *(2006.01)* ***C08K 5/315*** *(2006.01)*
***H01B 3/22*** *(2006.01)* *H01B 9/00* *(2006.01)*

(52) Cooperative Patent Classification (CPC):
(C-Sets available)
**H01B 3/441; C08K 5/315; H01B 3/22** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nexans**
**92400 Courbevoie (FR)**

(72) Inventors:
- **JARVID, Markus**
  **44242 Kungälv (SE)**
- **PEREGO, Gabriele**
  **20144 Milano (IT)**
- **MAUGIN, Melek**
  **69700 Chassagny (FR)**
- **MAZEL, Christelle**
  **38300 Ruy (FR)**

(74) Representative: **Ipsilon**
**Le Centralis**
**63, avenue du Général Leclerc**
**92340 Bourg-la-Reine (FR)**

## (54) COVERING LAYER OBTAINED FROM A POLYMER COMPOSITION COMPRISING AT LEAST ONE THERMOPLASTIC POLYMER MATERIAL AND AT LEAST ONE COMPOUND COMPRISING AT LEAST ONE NITRILE GROUP

(57) Cable comprising at least one elongated electrically conducting element and at least one covering layer obtained from a polymer composition, wherein the polymer composition comprises at least one thermoplastic polymer material and at least one compound comprising at least one nitrile group.

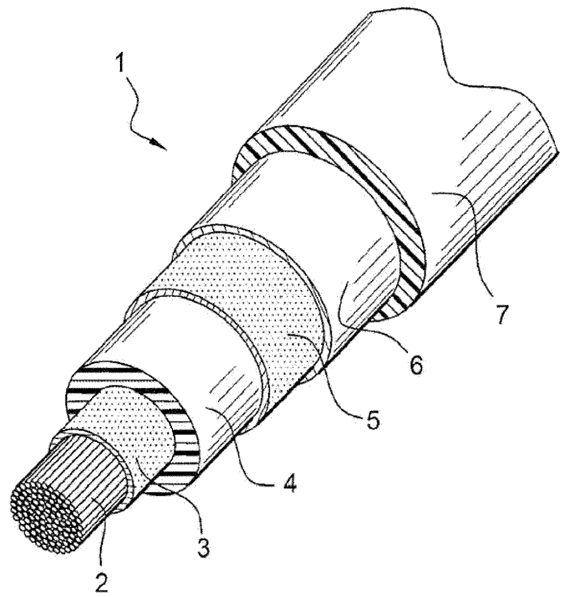


Figure 1

EP 4 390 976 A1

(52) Cooperative Patent Classification (CPC): (Cont.)

C-Sets
**C08K 5/315, C08L 23/14**

## Description

The present invention relates to the field of cables, notably medium or high voltage cables. It is particularly interested in a cable comprising at least one elongated electrically conducting element and at least one covering layer obtained from a polymer composition, in a process for preparing said cable, in a polymer composition and in a process for preparing said polymer composition.

The invention applies typically, but not exclusively, to cables intended for power transmission, especially medium-voltage power cables (especially from 6 to 45-60 kV) or high-voltage power cables (especially above 60 kV, and which may be up to 400 kV), whether for DC or AC current, for example in the fields of overhead, submarine or terrestrial electricity transmission, or alternatively in the field of aeronautics.

A medium-voltage or high-voltage cable generally comprises, from the interior to the exterior:

- an elongated electrically conducting element, especially made of copper or aluminium;
- an inner semiconducting layer surrounding said elongated electrically conducting element;
- an electrically insulating layer surrounding said inner semiconducting layer; and
- an outer semiconducting layer surrounding said electrically insulating layer.

In particular, the electrically insulating layer may be a polymer layer based on a crosslinked polyolefin such as a crosslinked polyethylene (XLPE) or an ethylene-propylene or ethylene-propylene-diene crosslinked elastomer. The crosslinking is generally performed during the step of extrusion of the polymer composition around the elongated electrically conducting element. The use of a crosslinked polyolefin provides a layer which has satisfactory electrical and mechanical properties and gives a cable which can function at a temperature above 70°C, or even equal to 90°C. However, several problems are encountered. Firstly, crosslinked materials cannot be recycled. Secondly, crosslinking (vulcanization) to produce a homogeneous layer requires specific reaction conditions (e.g. in terms of duration and temperature) which reduce the rate of manufacture of the cable and increase its production cost. Finally, crosslinking may occasionally start prematurely in the extruder and/or the extruder head, leading to degradation of the quality of the layer obtained, especially of its dielectric properties.

Alternatives have thus been proposed, such as a thermoplastic layer of low-density polyethylene (LDPE) or of high-density polyethylene (HDPE). However, a cable comprising such an electrically insulating layer cannot function at a temperature above about 70°C for an LDPE thermoplastic layer and above 80°C for an HDPE thermoplastic layer, leading to a limitation of the power that can be transmitted in said cable and of the manufacturing methods.

It is also known practice to manufacture an electrically insulating layer composed of several strips of paper or of a paper-polypropylene composite impregnated with a large amount of dielectric liquid (e.g. cable containing paper impregnated with oil). The dielectric liquid completely fills the empty spaces present in the layer and prevents partial discharges and damage to the insulation of the cable. However, this type of electrically insulating layer is very complex and expensive to manufacture.

The choice of the dielectric liquid will depend on the envisaged application (i.e. the type of electrical equipment) and on its compatibility with the solid insulator that it is intended to impregnate and/or with which it forms an intimate mixture. Among the conventional dielectric liquids, mention may be made of mineral oils (e.g. naphthenic oils, paraffinic oils, aromatic oils or polyaromatic oils), vegetable oils (e.g. soybean oil, linseed oil, rapeseed oil, corn oil or castor oil) or synthetic oils such as aromatic hydrocarbons (alkylbenzenes, alkylnaphthalenes, alkylbiphenyls, alkyldiarylethylenes, etc.), silicone oils, ether oxides, organic esters or aliphatic hydrocarbons.

In particular, international patent application WO 02/03398 A1 describes a cable comprising at least one electrical conductor and at least one extruded electrically insulating layer based on a dielectric liquid in intimate mixture with a thermoplastic polymer material comprising a propylene homopolymer or a copolymer of propylene with at least one olefin comonomer chosen from ethylene and an alpha-olefin other than propylene. The dielectric liquid is an aromatic hydrocarbon comprising at least one hydrocarbon of alkylaryl type containing at least two non-fused aromatic rings (e.g. dibenzyltoluene or a mixture of 85% by mass of monoxylylxylene and 15% by mass of dixylylxylene). International patent application WO 02/03398 A1 indicates that the dielectric liquid is free of polar compounds so as to absorb a minimum amount of water and to avoid the formation of defects in the insulating layer associated with the presence of water vapour during hot extrusion. However, aromatic hydrocarbons (alkylbenzenes, alkylnaphthalenes, alkylbiphenyls, alkyldiarylethylenes) are expensive and generally entail safety and/or environmental problems (e.g. certain aromatic hydrocarbons are considered to be carcinogenic).

90 to 95% of the dielectric liquid market is covered by mineral oils on account of the low cost of these "natural" products, obtained directly by refining crude oils. The chemical composition of a mineral oil is extremely complex (several thousand different molecules) and may vary within wide proportions. The chemical composition of a mineral oil is thus generally defined by its paraffinic carbon (Cp) content, its naphthenic carbon (Cn) content and its aromatic carbon (Ca) content. Mineral oils may also contain a small percentage of hydrocarbon molecules which comprise in their structure

heteroatoms such as nitrogen, sulfur or oxygen (e.g. polar compounds). The polar compound content of a mineral oil may be determined according to standard ASTM D2007-02. However, the stability to oxidation and dielectric behaviour of mineral oils are lower than those of aromatic hydrocarbons. Moreover, it is known from international patent application WO 2004/066318 A1 that the electrical properties of a cable comprising at least one electrical conductor and at least one extruded electrically insulating layer based on a thermoplastic polymer material in intimate mixture with a mineral oil as dielectric liquid may be deteriorated by the presence of these polar compounds, especially in terms of dielectric losses.

WO 2017/103509 A1 discloses a cable comprising at least one elongated electrically conducting element, and at least one electrically insulating layer obtained from a polymer composition, wherein said electrically insulating layer is a non-crosslinked layer, wherein said polymer composition includes at least one polypropylene-based thermoplastic polymer material and a dielectric liquid, and wherein the dielectric liquid comprises at least one mineral oil and at least one polar compound selected from benzophenone, acetophenone, a derivative of benzophenone, and a derivative of acetophenone. WO 2017/103509 A1 discloses that the presence of one polar compound selected from benzophenone, acetophenone, a derivative of benzophenone, and a derivative of acetophenone in the dielectric liquid enables to improve the performance of the polymer composition in terms of dielectric breakdown strength values, without significantly affecting the tan $\delta$ values and therefore the dielectric losses.

There is thus still a need for electric cables comprising an electrically insulating layer which have electrical properties comparable to those obtained with an XLPE crosslinked layer, while at the same time ensuring good mechanical properties.

Thus, the aim of the present invention is to overcome the drawbacks of the prior art and to provide a cable, in particular a medium-voltage or high-voltage cable, which can function at temperatures above 70°C and which comprises a recyclable covering layer, in particular an electrically insulating layer, which has improved electrical properties, especially in terms of dielectric breakdown strength, while at the same time ensuring low dielectric losses.

These aims are achieved by the invention which will be described hereinbelow.

According to a first aspect, the present invention relates to a cable comprising at least one elongated electrically conducting element and at least one covering layer obtained from a polymer composition, wherein the polymer composition comprises at least one thermoplastic polymer material and at least one compound comprising at least one nitrile group.

The presence of at least one compound comprising at least one nitrile group in the polymer composition makes it possible to further increase the dielectric breakdown strength of the covering layer of an electric cable while at the same time ensuring low dielectric losses. This can be notably explained by the presence of the nitrile group (-C≡N group) which has electron withdrawing properties and which therefore gives a high electron affinity to the compound comprising at least one nitrile group. Moreover, the presence of a thermoplastic polymer material makes it possible to increase the operating temperature of the cable to 90°C-110°C.

The compound comprising at least one nitrile group is preferably a polar compound.

In the present description, the terms "polar compound" means a compound which is retained on adsorbent clay after percolation of the sample in n-pentane eluent under the conditions specified in the ASTM D2007-02.

The compound comprising at least one nitrile group may have a melting point or a pour point lower than or equal to 140°C, preferably lower than or equal to 130°C, more preferably lower than or equal to 120°C and even more preferably lower than or equal to 110°C or 100°C.

The compound comprising at least one nitrile group may have a melting point or a pour point in the range of -130°C to 140°C, preferably in the range of - 60°C to 140°C, more preferably in the range of -50°C to 130°C and even more preferably in the range of -40°C to 120°C or in the range of -30°C to 110°C or in the range of -20°C to 100°C.

In one preferred embodiment, the compound comprising at least one nitrile group has a melting point or a pour point lower than or equal to 90°C (notably in the range of -20°C to 90°C), preferably lower than or equal to 80°C (notably in the range of -20°C to 80°C).

The melting point may be determined by known techniques such as, for example, by Differential Scanning Calorimetry (DSC) analysis.

The pour point may be determined according to ASTM standard D97-02.

The compound comprising at least one nitrile group is preferably lipophilic.

It is known that the lipophilicity of a molecule can be measured by the LogP (also called Log Know) value, which is the octanol-water partition coefficient.

In particular, the compound comprising at least one nitrile group may have a LogP value higher than or equal to 2.5, preferably higher than or equal to 3, more preferably higher than or equal to 3.5, and even more preferably higher than or equal to 4.

In one preferred embodiment, the compound comprising at least one nitrile group has a LogP value higher than or equal to 4.5, preferably higher than or equal to 5, more preferably higher than or equal to 5.5, and even more preferably higher than or equal to 6.

The LogP value may be determined experimentally, for example using HPLC, or by calculation programs.

Preferably, the compound comprising at least one nitrile group is free from-OH group or -COOH group.

The compound comprising at least one nitrile group may be selected from:

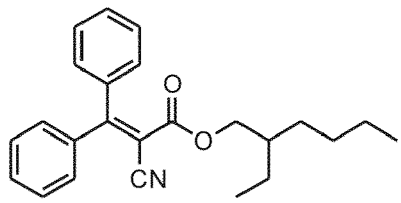

(2-ethylhexyl 2-cyano-3,3-diphenyl-2-propenoate, also called octocrylene);

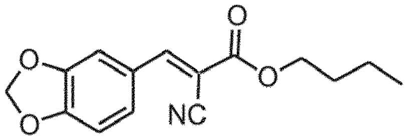

(butyl 3-(benzo[d][1,3]dioxol-5-yl)-2-cyanoacrylate);

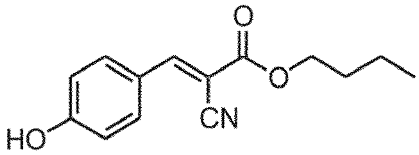

(butyl 2-cyano-3-(4-hydroxyphenyl)acrylate);

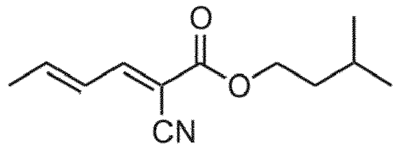

(isopentyl 2-cyanohexa-2,4-dienoate);

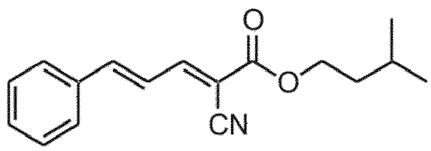

(isopentyl 2-cyano-5-phenylpenta-2,4-dienoate);

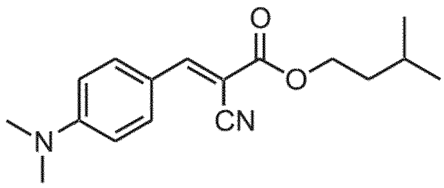

(butyl 2-cyano-3-(4-(dimethylamino)phenyl)acrylate);

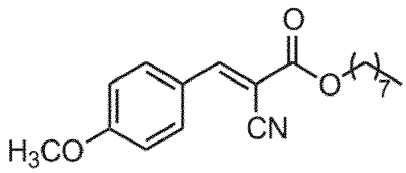

(octyl 2-cyano-3-(4-methoxyphenyl)acrylate);

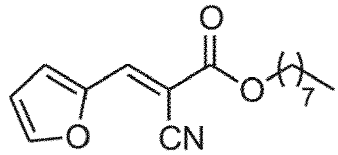

(octyl 2-cyano-3-(furan-2-yl)acrylate);

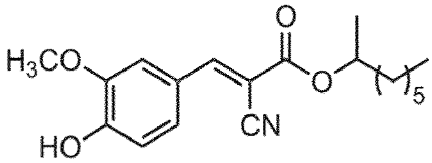

(octan-2-yl 2-cyano-3-(3-hydroxy-4-methoxyphenyl)acrylate);

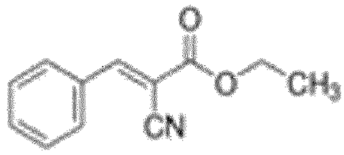

(ethyl trans-a-cyanocinnamate);

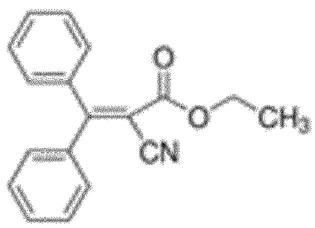

(ethyl 2-cyano-3,3-diphenylacrylate);

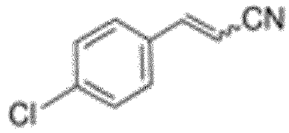

(4-Chlorocinnamonitrile);

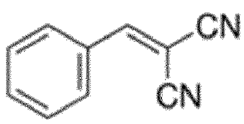

(benzylidenemalononitrile);

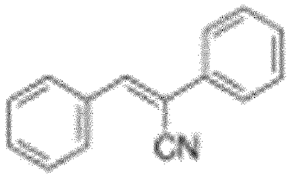

(a-Phenylcinnamonitrile);

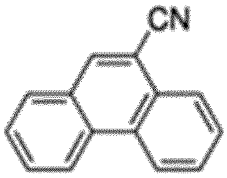

(9-Cyanophenanthrene); and mixtures thereof.

Compound of formula (I)

Preferably, the compound comprising at least one nitrile group is a compound of formula (I):

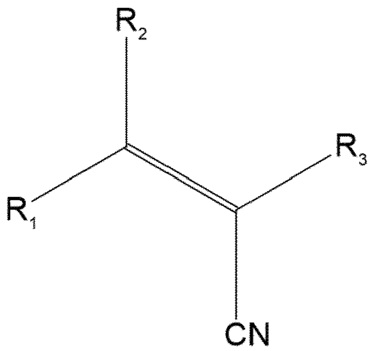

(I)

wherein $R_1$ is

a

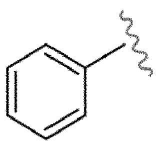

group,
a

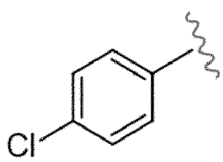

group,
a

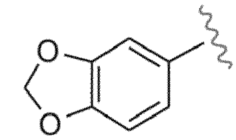

group, a

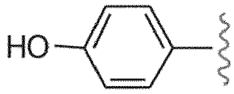

group, a

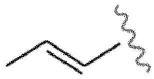

group, a

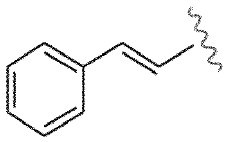

group, a

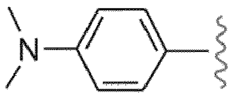

group, a

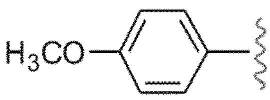

group, a

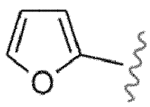

group, or a

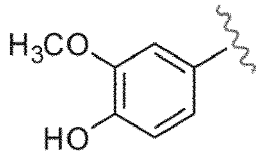

group;

wherein $R_2$ is

a

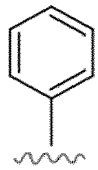

group, or
a hydrogen atom; and

wherein $R_3$ is

a

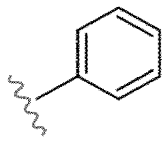

group,
a -CN group,
a hydrogen atom, or
a -COOR group, wherein R is a ($C_1$-$C_{10}$) linear or branched alkyl group, preferably a ($C_2$-$C_8$) linear or branched alkyl group, and more preferably an ethyl group, a 2-ethylhexyl group, a n-butyl group, an isoamyl group, a n-octyl group, or an octan-2-yl group.

The increase of the dielectric breakdown strength resulting from the presence of the compound of formula (I) in the polymer composition can be explained by the structure of the compound of formula (I), in particular by the double bond connected to the carbon atom bearing the —C=N group, the —C=N group and $R_3$ which provide a high electron affinity, and by the double bond connected to the carbon atom bearing the —C=N group, $R_1$ and $R_2$ which provide a low ionization potential due to their extended conjugated systems.
The compound of formula (I) is preferably a polar compound.
The compound of formula (I) may be selected from:

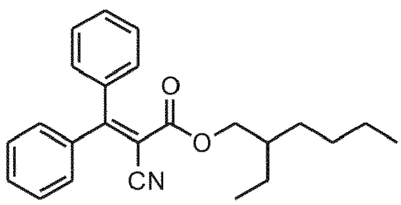

(2-ethylhexyl 2-cyano-3,3-diphenyl-2-propenoate, also called octocrylene);

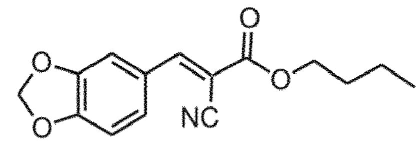

(butyl 3-(benzo[d][1,3]dioxol-5-yl)-2-cyanoacrylate);

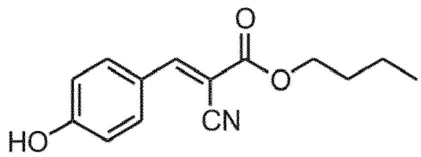

(butyl 2-cyano-3-(4-hydroxyphenyl)acrylate);

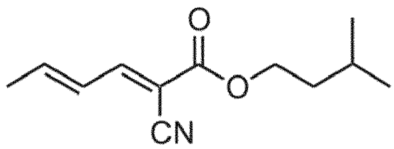

(isopentyl 2-cyanohexa-2,4-dienoate);

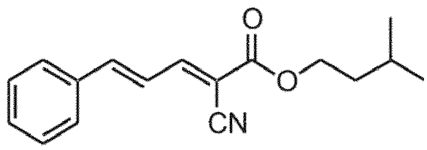

(isopentyl 2-cyano-5-phenylpenta-2,4-dienoate);

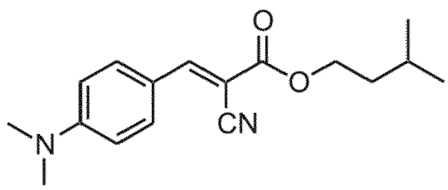

(butyl 2-cyano-3-(4-(dimethylamino)phenyl)acrylate);

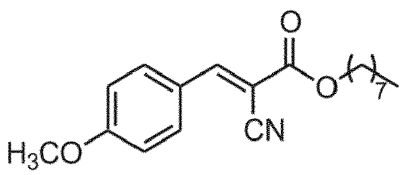

(octyl 2-cyano-3-(4-methoxyphenyl)acrylate);

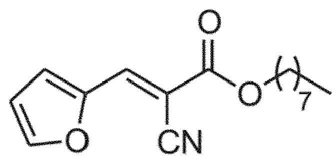

(octyl 2-cyano-3-(furan-2-yl)acrylate);

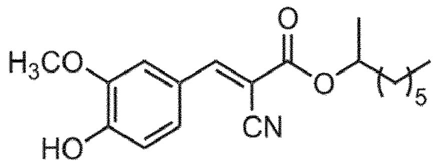

(octan-2-yl 2-cyano-3-(3-hydroxy-4-methoxyphenyl)acrylate);

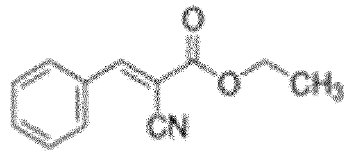

(ethyl trans-a-cyanocinnamate);

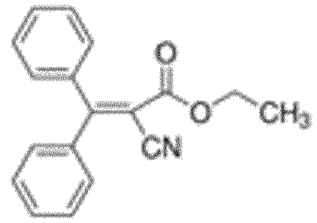

(ethyl 2-cyano-3,3-diphenylacrylate);

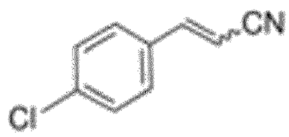

(4-Chlorocinnamonitrile);

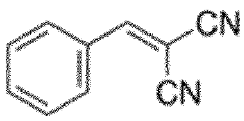

(benzylidenemalononitrile);

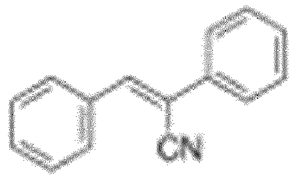

(a-Phenylcinnamonitrile); and
mixtures thereof.

In one embodiment, $R_3$ is a —COOR group, wherein R is a ($C_1$-$C_{10}$) linear or branched alkyl group, preferably a ($C_2$-$C_8$) linear or branched alkyl group, and more preferably an ethyl group, a 2-ethylhexyl group, a n-butyl group, an isoamyl group, a n-octyl group, or an octan-2-yl group.

When $R_3$ is a -COOR group, the compound of formula (I) provides a particularly high electron affinity due to the double bond connected to the carbon atom bearing the -C≡N group, the -C≡N group and the -C=O group of $R_3$ (the-C=N group and the -C=O group of $R_3$ have electron withdrawing properties). Furthermore, R contributes to the lipophilicity

of the compound of formula (I).

According to this particular embodiment, the compound of formula (I) may be selected from:

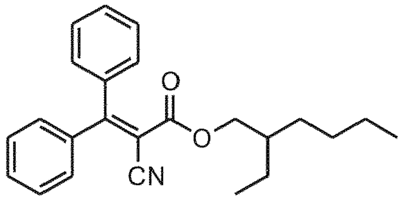

(2-ethylhexyl 2-cyano-3,3-diphenyl-2-propenoate, also called octocrylene);

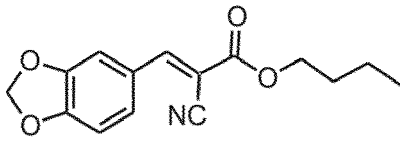

(butyl 3-(benzo[d][1,3]dioxol-5-yl)-2-cyanoacrylate);

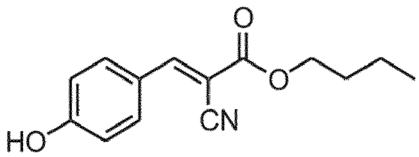

(butyl 2-cyano-3-(4-hydroxyphenyl)acrylate);

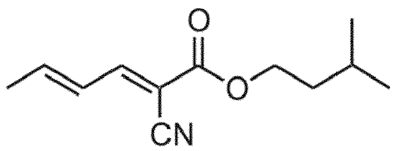

(isopentyl 2-cyanohexa-2,4-dienoate);

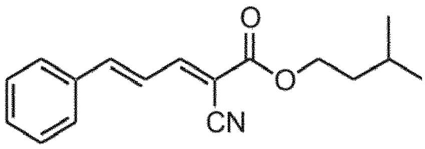

(isopentyl 2-cyano-5-phenylpenta-2,4-dienoate);

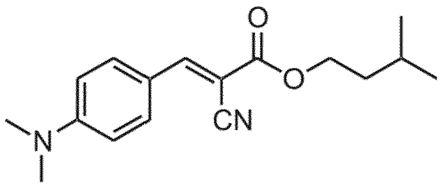

(butyl 2-cyano-3-(4-(dimethylamino)phenyl)acrylate);

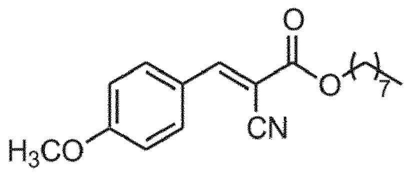

(octyl 2-cyano-3-(4-methoxyphenyl)acrylate);

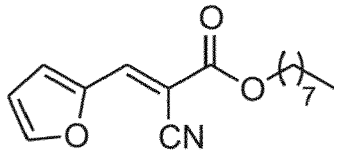

(octyl 2-cyano-3-(furan-2-yl)acrylate);

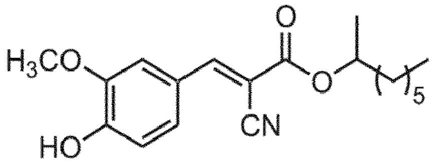

(octan-2-yl 2-cyano-3-(3-hydroxy-4-methoxyphenyl)acrylate);

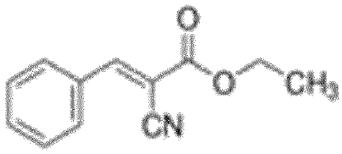

(ethyl trans-a-cyanocinnamate);

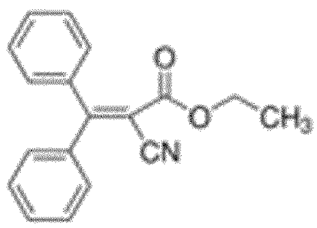

(ethyl 2-cyano-3,3-diphenylacrylate); and
mixtures thereof.

In one preferred embodiment, the compound of formula (I) is octocrylene.

The polymer composition may comprise a dielectric liquid.

The dielectric liquid preferably comprises the compound comprising at least one nitrile group, notably the compound of formula (I).

In other words, the polymer composition may comprise a dielectric liquid comprising the at least one compound comprising at least one nitrile group, notably the at least one compound of formula (I).

Mineral oil

The polymer composition may comprise at least one mineral oil.

The dielectric liquid preferably comprises the mineral oil.

In other words, the polymer composition may comprise a dielectric liquid comprising the at least one compound comprising at least one nitrile group, notably the at least one compound of formula (I), and the at least one mineral oil.

The mineral oil may be selected from naphthenic oils, paraffinic oils and mixtures thereof, preferably selected from hydrotreated naphthenic oils, hydrotreated paraffinic oils and mixtures thereof.

According to a particularly preferred embodiment, the mineral oil comprises a paraffinic carbon (Cp) content ranging from about 45 to 65% atomic, a naphthenic carbon (Cn) content ranging from about 35 to 55% atomic and an aromatic carbon (Ca) content ranging from about 0.5 to 10% atomic.

The mineral oil may have an amount of polar compounds lower than or equal to 2.5% by weight, preferably lower than or equal to 2% by weight, more preferably lower than or equal to 1.5% by weight, and even more preferably lower than or equal to 1% by weight, with respect to the total weight of the mineral oil.

For example, the mineral oil has an amount of polar compounds lower than or equal to 0.5% by weight, with respect to the total weight of the mineral oil

The amount of polar compounds of the mineral oil may be determined according to ASTM standard D2007-02.

The mineral oil may have a melting point or a pour point lower than 80°C (notably in the range of -130°C to +80°C), preferably lower than 20°C (notably in the range of -130°C to +20°C), more preferably lower than 0°C (notably in the range of -130°C to +0°C).

The dielectric liquid may comprise at least 70% by weight of mineral oil, preferably at least 75% by weight of mineral oil, more preferably at least 80% by weight of mineral oil, and even more preferably at least 85% by weight of mineral oil, relative to the total weight of the dielectric liquid.

The dielectric liquid may comprise from 70% by weight to 98% by weight of mineral oil, preferably from 75% by weight to 98% by weight of mineral oil, more preferably from 80% by weight to 98% by weight of mineral oil, even more preferably from 85% by weight to 98% by weight of mineral oil, relative to the total weight of the dielectric liquid.

In one preferred embodiment, the dielectric liquid comprises from 85% by weight to 95% by weight of mineral oil, notably from 87% by weight to 93% by weight of mineral oil, relative to the total weight of the dielectric liquid.

The compound of formula (I) may have a melting point or a pour point lower than or equal to 140°C, preferably lower than or equal to 130°C, more preferably lower than or equal to 120°C and even more preferably lower than or equal to 110°C or 100°C.

The compound of formula (I) may have a melting point or a pour point in the range of -130°C to 140°C, preferably in the range of -60°C to 140°C, more preferably in the range of -50°C to 130°C and even more preferably in the range of -40°C to 120°C or in the range of -30°C to 110°C or in the range of -20°C to 100°C.

In one preferred embodiment, the compound of formula (I) has a melting point or a pour point lower than or equal to 90°C (notably in the range of -20°C to 90°C), preferably lower than or equal to 80°C (notably in the range of -20°C to 80°C).

By virtue of these melting points or pour points values, the dissolution of the compound of formula (I) in the mineral oil is improved.

The compound of formula (I) is preferably lipophilic.

In particular, the compound of formula (I) may have a LogP value higher than or equal to 2.5, preferably higher than or equal to 3, more preferably higher than or equal to 3.5, and even more preferably higher than or equal to 4.

In one preferred embodiment, the compound of formula (I) has a LogP value higher than or equal to 4.5, preferably higher than or equal to 5, more preferably higher than or equal to 5.5, and even more preferably higher than or equal to 6.

By virtue of these LogP values, the solubilization of the compound of formula (I) in the mineral oil is improved.

Preferably, the compound of formula (I) is free from -OH group or -COOH group.

The dielectric liquid may comprise at least 2% by weight, preferably at least 2.5% by weight, more preferably at least 3% by weight, even more preferably at least 3.5% by weight, of the compound comprising at least one nitrile group, notably the compound of formula (I), relative to the total weight of the dielectric liquid. By virtue of this minimum amount of the compound comprising at least one nitrile group, notably the compound of formula (I), the dielectric breakdown strength is improved.

The dielectric liquid may comprise at most 30% by weight, preferably at most 20% by weight, more preferably at most 15% by weight, even more preferably at most 10% by weight, of the compound comprising at least one nitrile group, notably the compound of formula (I), relative to the total weight of the dielectric liquid. This maximum amount makes it possible to ensure moderate, or even low, dielectric losses.

The dielectric liquid may comprise from 2% by weight to 30% by weight, preferably from 2.5% by weight to 20% by weight, more preferably from 3% by weight to 15% by weight, even more preferably from 3.5% by weight to 10% by weight, of the compound comprising at least one nitrile group, notably the compound of formula (I), relative to the total weight of the dielectric liquid.

In one preferred embodiment, the dielectric liquid comprises from 4% by weight to 8% by weight, notably from 4% by weight to 6% by weight, of the compound comprising at least one nitrile group, notably the compound of formula (I), relative to the total weight of the dielectric liquid.

In one preferred embodiment, the dielectric liquid comprises:

- from 70% by weight to 98% by weight, preferably from 75% by weight to 97.5% by weight of mineral oil, more preferably from 80% by weight to 97% by weight, and even more preferably from 85% by weight to 96.5% by weight, of mineral oil, relative to the total weight of the dielectric liquid; and
- from 2% by weight to 30% by weight, preferably from 2.5% by weight to 20% by weight, more preferably from 3% by weight to 15% by weight, even more preferably from 3.5% by weight to 10% by weight, of the compound comprising at least one nitrile group, notably the compound of formula (I), relative to the total weight of the dielectric liquid.

For example, the dielectric liquid comprises:

- from 85% by weight to 95% by weight, preferably from 87% by weight to 93% by weight, of mineral oil, relative to the total weight of the dielectric liquid; and
- from 4% by weight to 8% by weight, preferably from 4% by weight to 6% by weight, of the compound comprising at least one nitrile group, notably the compound of formula (I), relative to the total weight of the dielectric liquid.

Antioxidant compound

The polymer composition may comprise at least one antioxidant compound.
The dielectric liquid preferably comprises the antioxidant compound.
In other words, the polymer composition may comprise a dielectric liquid comprising the at least one compound comprising at least one nitrile group, notably the at least one compound of formula (I), the at least one mineral oil and the at least one antioxidant compound.
The dielectric liquid may comprise at least 2% by weight of the antioxidant compound, preferably at least 2.5% by weight of the antioxidant compound, more preferably at least 3% by weight of the antioxidant compound, even more preferably at least 3.5% by weight of the antioxidant compound, relative to the total weight of the dielectric liquid.
The dielectric liquid may comprise from 2% by weight to 8% by weight of the antioxidant compound, preferably from 2.5% by weight to 8% by weight of the antioxidant compound, more preferably from 3% by weight to 8% by weight of the antioxidant compound, even more preferably from 3.5% by weight to 8% by weight of the antioxidant compound, relative to the total weight of the dielectric liquid.
In one preferred embodiment, the dielectric liquid comprises from 4% by weight to 6% by weight of the antioxidant compound, relative to the total weight of the dielectric liquid.
The antioxidant compound is preferably selected from hindered phenols, thio esters, sulfur-based antioxidants, phosphorus-based antioxidants, antioxidants of amine type, and mixtures thereof.
Examples of hindered phenols include pentaerythrityl tetrakis(3-(3,5-di-tert-butyl-4-hydroxyphenyl)propionate) (Irganox® 1010), octadecyl 3-(3,5-di-tert-butyl-4-hydroxyphenyl)propionate (Irganox® 1076), 1,3,5-trimethyl-2,4,6-tris(3,5-di-tert-butyl-4-hydroxybenzyl)benzene (Irganox® 1330), 4,6-bis(octylthiomethyl)-o-cresol (Irgastab® KV10), 2,2'-thiobis(6-tert-butyl-4-methylphenol) (Irganox® 1081), 2,2'-thiodiethylenebis[3-(3,5-di-tert-butyl-4-hydroxyphenyl) propionate] (Irganox® 1035), 2,2'-methylenebis(6-tert-butyl-4-methylphenol), 1,2-bis(3,5-di-tert-butyl-4-hydroxyhydrocinnamoyl)hydrazine (Irganox® MD 1024) and 2,2'-oxamidobis(ethyl 3-(3,5-di-tert-butyl-4-hydroxyphenyl) propionate).
Examples of thio esters include didodecyl 3,3'-thiodipropionate (Irganox® PS800), distearyl thiodipropionate (Irganox® PS802) and 4,6-bis(octylthiomethyl)-o-cresol (Irganox® 1520).
Examples of sulfur-based antioxidants include dioctadecyl 3,3'-thiodipropionate and didodecyl 3,3'-thiodipropionate.
Examples of phosphorus-based antioxidants include tris(2,4-di-tert-butylphenyl) phosphite (Irgafos® 168) and bis(2,4-di-tert-butylphenyl)pentaerythrityl diphosphite (Ultranox® 626).
Examples of antioxidants of amine type include phenylenediamines (e.g. 1PPD or 6PPD), diphenylaminestyrenes, diphenylamines, mercaptobenzimidazoles and polymerized 2,2,4-trimethyl-1,2 dihydroquinoline (TMQ).
An example of a mixture of antioxidants is Irganox B 225, which comprises an equimolar mixture of Irgafos 168 and Irganox 1010 as described above.
In one preferred embodiment, the dielectric liquid comprises:

- from 70% by weight to 98% by weight, preferably from 75% by weight to 98% by weight of mineral oil, more preferably from 80% by weight to 98% by weight, and even more preferably from 85% by weight to 95% by weight, of mineral oil, relative to the total weight of the dielectric liquid;
- from 2% by weight to 8% by weight, preferably from 3% by weight to 8% by weight, more preferably from 4% by weight to 8% by weight, and even more preferably from 4% by weight to 6% by weight, of the compound comprising at least one nitrile group, notably the compound of formula (I), relative to the total weight of the dielectric liquid; and
- from 2% by weight to 8% by weight, preferably from 3% by weight to 8% by weight, more preferably from 4% by weight to 8% by weight, and even more preferably from 4% by weight to 6% by weight, of the antioxidant compound,

relative to the total weight of the dielectric liquid.

The ratio of the number of aromatic carbon atoms with respect to the total number of carbon atoms in the dielectric liquid may be lower than 0.6, preferably lower than 0.3.
The ratio of the number of aromatic carbon atoms with respect to the total number of carbon atoms in the dielectric liquid may be determined according to standard ASTM D3238.
The dielectric liquid may represent from 1% to 20% by weight, preferably from 2% to 15% by weight, more preferably from 3% to 12% by weight, and even more preferably from 3% to 9% by weight, relative to the total weight of the polymer composition.

Thermoplastic polymer material

Preferably, the thermoplastic polymer material is a polypropylene-based thermoplastic polymer material.
The polypropylene-based thermoplastic polymer material may comprise at least one propylene homopolymer P1 and/or at least one propylene copolymer P1.
The propylene homopolymer P1 preferably has an elastic modulus ranging from about 1250 to 1600 MPa.
The propylene homopolymer P1 can represent at least about 10% by weight, and preferably about 15 to 30% by weight, based on the total weight of the polypropylene-based thermoplastic polymer material.
Examples of propylene copolymers P1 include propylene and olefin copolymers, with olefin being selected in particular from ethylene and an olefin $\alpha$1 different from the propylene.
The ethylene or olefin $\alpha$1 different from the propylene of the propylene-olefin copolymer preferably represents at most about 15% by mole, and more preferably at most about 10% by mole, based on the total number of moles of propylene-olefin copolymer.
The olefin $\alpha$1 different from the propylene can have the formula CH2=CH-$R_1$, wherein $R_1$ is a linear or branched alkyl group having from 2 to 12 carbon atoms, particularly selected from the following olefins al: 1-butene, 1-pentene; 4-methyl-1-pentene, 1-hexene, 1-octene, 1-decene, 1-dodecene, and one of their mixtures.
Propylene and ethylene copolymers are preferred as propylene copolymers P1.
The propylene copolymer P1 can be a random propylene copolymer or a heterophasic propylene copolymer.
The random propylene copolymer P1 preferably has an elastic modulus ranging from about 600 to 1200 MPa.
One example of a random propylene copolymer is the one sold by the company LYONDELLBASELL under the reference MOPLEN RP210G.
The heterophasic propylene copolymer can comprise a thermoplastic phase of propylene type and a thermoplastic elastomer phase of ethylene-olefin a2 copolymer type.
The olefin $\alpha$2 of the thermoplastic elastomer phase of the heterophasic copolymer can be propylene.
The thermoplastic elastomer phase of the heterophasic copolymer can represent at least about 20% by weight, and preferably at least about 45% by weight, based on the total weight of the heterophasic copolymer.
The heterophasic propylene copolymer preferably has an elastic modulus ranging from 50 to 1200 MPa, and particularly preferably: either an elastic modulus ranging from about 50 to 550 MPa, and more particularly preferably ranging from about 50 to 250 MPa; or an elastic modulus ranging from about 600 to 1200 MPa.
One example of a heterophasic propylene copolymer is the heterophasic propylene copolymer marketed by LyondellBasell with the product name Adflex® Q 200 F, or the heterophasic propylene copolymer marketed by LYONDELLBASELL under the reference HIFAX CA7441A.
The propylene homopolymer or copolymer P1 can have a melting temperature greater than about 110°C, preferably greater than about 130°C, particularly preferably greater than or equal to about 140°C.
The propylene homopolymer or copolymer P1 can have a melting enthalpy ranging from about 20 to 100 J/g.
In particular, the propylene homopolymer P1 has a melting enthalpy ranging from about 80 to 90 J/g.
The random propylene copolymer P1 can have a melting enthalpy ranging from about 40 to 80 J/g.
The heterophasic propylene copolymer P1 can have a melting enthalpy ranging from about 20 to 50 J/g.
The propylene homopolymer or copolymer P1 can have a melt flow index ranging from 0.5 to 3 g/10 min, measured at about 230° C. with a load of about 2.16 kg according to ASTM D1238-00.
The random propylene copolymer P1 can have a melt flow index ranging from 1.2 to 2.5 g/10 min, and preferably from 1.5 to 2.5 g/10 min, measured at about 230° C. with a load of about 2.16 kg according to ASTM D1238-00.
The heterophasic propylene copolymer P1 can have a melt flow index ranging from 0.5 to 1.5 g/10 min, and preferably from 0.5 to 1.4 g/10 min, measured at about 230° C. with a load of about 2.16 kg according to ASTM D1238-00.
According to a preferred embodiment, notably for medium or high voltage applications, the polypropylene-based thermoplastic polymer material comprises from 80 to 100% by weight, preferably from 90 to 100% by weight, more preferably from 95 to 100% by weight of a heterophasic propylene copolymer P1, based on the total weight of the polypropylene-based thermoplastic polymer material.

The polypropylene-based thermoplastic polymer material can comprise several different propylene polymers, such as several different propylene homopolymers P1, at least one propylene homopolymer P1 and at least one propylene copolymer P1, or several different propylene copolymers P1.

The polypropylene-based thermoplastic polymer material preferably comprises at least about 50% by weight, preferably about 55 to 90% by weight, and particularly preferably about 60 to 90% by weight, of propylene polymer(s), based on the total weight of the polypropylene-based thermoplastic polymer material.

When the polypropylene-based thermoplastic polymer material comprises several different propylene copolymers P1, it preferably comprises two different propylene copolymers P1, said propylene copolymers P1 being as defined above.

In particular, the polypropylene-based thermoplastic polymer material can include a random propylene copolymer (as first propylene copolymer P1) and a heterophasic propylene copolymer (as second propylene copolymer P1), or two different heterophasic propylene copolymers.

When the polypropylene-based thermoplastic polymer material comprises a random propylene copolymer and a heterophasic propylene copolymer, said heterophasic propylene copolymer preferably has an elastic modulus ranging from about 600 to 1200 MPa.

According to a specific example, the two heterophasic propylene copolymers have a different elastic modulus. Preferably, the polypropylene-based thermoplastic polymer material comprises a first heterophasic propylene copolymer having an elastic modulus ranging from about 50 to 550 MPa, and particularly preferably ranging from about 50 to 250 MPa; and a second heterophasic propylene copolymer having an elastic modulus ranging from about 600 to 1200 MPa.

Advantageously, the first and second heterophasic propylene copolymers have a melt flow index as defined above.

These combinations of propylene copolymers P1 can advantageously improve the mechanical properties of the covering layer. In particular, the combination makes it possible to obtain optimized mechanical properties of the covering layer, in particular in terms of elongation at break and flexibility; and/or form a more homogeneous covering layer.

According to a preferred example, the propylene copolymer P1 or the propylene copolymers P1 when there are several of them, represent(s) at least about 50% by weight, preferably about 55 to 90% by weight, and more preferably about 60 to 90% by weight, based on the total weight of the polypropylene-based thermoplastic polymer material.

The random propylene copolymer P1 can represent at least about 20% by weight, and preferably about 30 to 70% by weight, based on the total weight of the polypropylene-based thermoplastic polymer material.

The heterophasic propylene copolymer P1, or heterophasic propylene copolymers P1 when there are several of them, can represent from about 5 to 95% by weight, preferably about 50 to 90% by weight, and particularly preferably about 60 to 80% by weight, based on the total weight of the polypropylene-based thermoplastic polymer material.

The polypropylene-based thermoplastic polymer material can further comprise an olefin homopolymer or copolymer P2, the olefin being selected in particular from ethylene and an olefin a3 having the formula CH2=CH-$R_2$, wherein $R_2$ is a linear or branched alkyl group having from 1 to 12 carbon atoms.

Said homopolymer or a copolymer of olefin P2 is preferably different from said propylene homopolymer or copolymer P1.

The olefin a3 is preferably selected from the following olefins: propylene, 1-butene, isobutylene, 1-pentene, 4-methyl-1-pentene, 1-hexene, 1-octene, 1-decene, 1-dodecene, and one of their mixtures.

The olefin a3 that is particularly preferred is 1-butene, 1-hexene, 1-octene or one of their mixtures.

According to an advantageous example, $R_2$ is a linear or branched alkyl group having from 2 to 8 carbon atoms.

The combination of polymers P1 and P2 makes it possible to obtain a thermoplastic polymer material with good mechanical properties, particularly in terms of elastic modulus.

The olefin homopolymer or copolymer P2 is preferably an ethylene polymer.

The ethylene polymer can be a low-density polyethylene polymer, a medium-density polyethylene, or a high-density polyethylene, and preferably a linear low-density polyethylene (LLDPE); in particular according to ISO 1183A (at a temperature of 23°C).

One example of a linear low-density polyethylene is the one sold by the company INEOS under the reference BPD 3642.

According to a preferred example, the olefin homopolymer or copolymer P2 represents about 5 to 50% by weight, and more preferably about 10 to 40% by weight, based on the total weight of the polypropylene-based thermoplastic polymer material.

According to a preferred embodiment, notably for medium or high voltage applications, the polypropylene-based thermoplastic polymer material comprises:

- two propylene copolymers P1, such as a random propylene copolymer (as first propylene copolymer P1) as defined above and a heterophasic propylene copolymer (as second propylene copolymer P1) as defined above or two different heterophasic propylene copolymers as defined above, and

- an olefin homopolymer or copolymer P2 as defined above, such as an ethylene polymer, preferably a linear low-density polyethylene.

In this particular embodiment, the olefin homopolymer or copolymer P2 is preferably different from the two propylene copolymers P1.

In this particular embodiment, the polypropylene-based thermoplastic polymer material preferably comprises:

- from 40 to 80% by weight, preferably from 50 to 70% by weight, of the random propylene copolymer (as first propylene copolymer P1), based on the total weight of the polypropylene-based thermoplastic polymer material;
- from 10 to 40% by weight, preferably from 10 to 30% by weight, of the heterophasic propylene copolymer (as second propylene copolymer P1), based on the total weight of the polypropylene-based thermoplastic polymer material; and
- from 10 to 40% by weight, preferably from 10 to 30% by weight, of the olefin homopolymer or copolymer P2, such as the ethylene polymer, preferably the linear low-density polyethylene, based on the total weight of the polypropylene-based thermoplastic polymer material.

This combination of propylene copolymers P1 and an olefin homopolymer or copolymer P2 further improves the mechanical properties of the covering layer, while ensuring good thermal conductivity.

The thermoplastic polymer material preferably comprises at least one propylene polymer having a Vicat temperature of at least 90°C, more preferably of at least 110°C, and even more preferably of at least 130°C. The propylene polymer having such a Vicat temperature is preferably the major polymer in the thermoplastic polymer material.

According to a preferred example, the propylene polymer having such a Vicat temperature is a random copolymer of propylene as defined above.

In the present description, the Vicat temperature, or in other words the Vicat softening point (also known as the Vicat softening temperature) may be readily determined according to the standard ISO 306 Method A (2013).

The thermoplastic polymer material of the polymer composition of the covering layer is preferably heterophasic (i.e. it comprises several phases). The presence of several phases generally results from the mixing of two different polyolefins, such as a mixture of different propylene polymers or a mixture of a propylene polymer and an ethylene polymer.

The thermoplastic polymer material may represent from 80% to 99% by weight, preferably from 85% to 98% by weight, more preferably from 88% to 97% by weight, and even more preferably from 91% to 97% by weight, relative to the total weight of the polymer composition.

In one preferred embodiment, the polymer composition comprises:

- from 80% to 99% by weight, preferably from 85% to 98% by weight, more preferably from 88% to 97% by weight, and even more preferably from 91% to 97% by weight, of the thermoplastic polymer material, relative to the total weight of the polymer composition; and
- from 1% to 20% by weight, preferably from 2% to 15% by weight, more preferably from 3% to 12% by weight, and even more preferably from 3% to 9% by weight, of the dielectric liquid, relative to the total weight of the polymer composition.

In case the thermoplastic polymer material is a polypropylene-based thermoplastic polymer material, the polymer composition does not comprise any crosslinking agents, silane-type coupling agents, free radical initiators such as peroxides, azides and additives that enable crosslinking. The reason for this is that such agents degrade the polypropylene-based thermoplastic polymer material.

In one preferred embodiment, the polymer composition comprises at least 80% by weight, preferably at least 85% by weight, more preferably at least 90% by weight, even more preferably from 92% to 96% by weight, of the thermoplastic polymer material, relative to the total weight of the polymer composition.

In one preferred embodiment, the polymer composition comprises from 0.01% to 1% by weight, preferably from 0.05% to 0.75% by weight, more preferably from 0.1% to 0.5% by weight, even more preferably from 0.2% to 0.4% by weight, of the compound comprising at least one nitrile group, notably the compound of formula (I), relative to the total weight of the polymer composition.

In one preferred embodiment, the polymer composition comprises:

- at least 80% by weight, preferably at least 85% by weight, more preferably at least 90% by weight, even more preferably from 92% to 96% by weight, of the thermoplastic polymer material, relative to the total weight of the polymer composition;
- from 4% to 7% by weight, preferably from 4.5% to 6.5% by weight, more preferably from 5% to 6% by weight, of mineral oil, relative to the total weight of the polymer composition;
- from 0.01% to 1% by weight, preferably from 0.05% to 0.75% by weight, more preferably from 0.1% to 0.5% by

weight, even more preferably from 0.2% to 0.4% by weight, of the compound comprising at least one nitrile group, notably the compound of formula (I), relative to the total weight of the polymer composition; and

- from 0.01% to 1% by weight, preferably from 0.05% to 0.75% by weight, more preferably from 0.1% to 0.5% by weight, even more preferably from 0.2% to 0.4% by weight, of the antioxidant compound, relative to the total weight of the polymer composition.

Cable

The covering layer may be an extruded layer.

The covering layer may be a non-crosslinked layer (i.e. thermoplastic layer).

In the present description, the terms "non-crosslinked layer" or "thermoplastic layer" are synonymous and mean a layer whose gel rate according to ASTM D2765-01 (xylene extraction) is at most about 20%, preferably at most about 15%, particularly preferably at most about 10%, more particularly preferably at most about 5%, and even more particularly preferably 0%.

The covering layer may be an electrically insulating layer.

The covering layer may surround the elongated electrically conducting element.

The cable may be a cable for direct current (DC) or alternating current (AC).

The cable may be a medium or high voltage cable.

In one embodiment, the cable comprises an inner semiconducting layer surrounding the elongated electrically conducting element, an electrically insulating layer surrounding the inner semiconducting layer and an outer semiconducting layer surrounding the electrically insulating layer, wherein the covering layer as defined above is the electrically insulating layer.

In this particular embodiment, the inner semiconducting layer is preferably in direct contact with the elongated electrical conductor, the electrically insulating layer is preferably in direct contact with the inner semiconducting layer, and the outer semiconducting layer is preferably in direct contact with the electrically insulating layer.

In the present description, the term "electrically insulating layer" means a layer whose electrical conductivity may be not more than $1\times10^{-9}$ S/m, and preferably not more than $1\times10^{-10}$ S/m (Siemens per metre) (at 25°C).

In the present description, the term "semiconducting layer" means a layer whose electrical conductivity may be at least $1\times10^{-9}$ S/m (Siemens per metre), preferably at least $1\times10^{-3}$ S/m, and may preferably be less than $1\times10^{3}$ S/m (at 25°C).

The elongated electrically conducting element may be a mono-core conductor, such as for example a metal wire, or a multi-core conductor, such as for example a plurality of, optionally twisted, metal wires.

The elongated electrically conducting element may be made of aluminium, of aluminium alloy, of copper, of copper alloy, and of a combination thereof.

Polymer composition

According to a further aspect, the present invention relates to a polymer composition comprising at least one thermoplastic polymer material and at least one compound comprising at least one nitrile group.

The compound comprising at least one nitrile group may be as defined hereinabove.

Preferably, the compound comprising at least one nitrile group is a compound of formula (I):

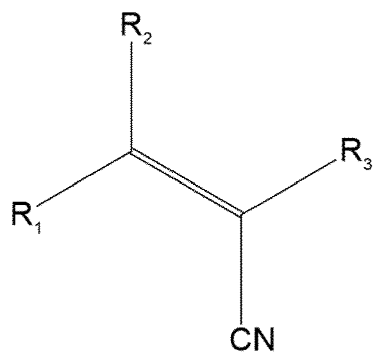

(I)

wherein $R_1$ is

a

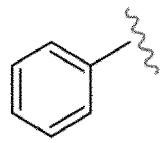

group,

a

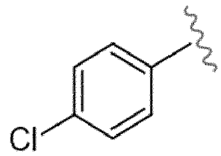

group,

a

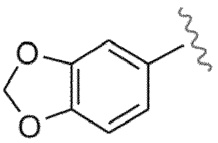

group,

a

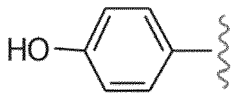

group,

a

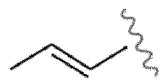

group,

a

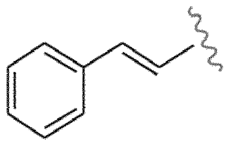

group,

a

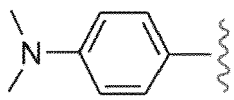

group,

a

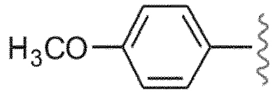

group,

a

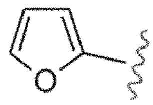

group, or

a

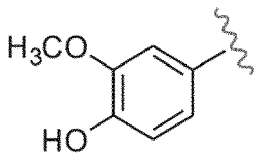

group;

wherein $R_2$ is

a

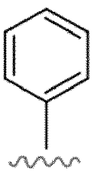

group, or
a hydrogen atom; and

wherein $R_3$ is

a

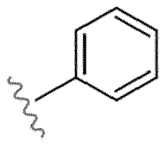

group,
a -CN group,
a hydrogen atom, or
a -COOR group, wherein R is a ($C_1$-$C_{10}$) linear or branched alkyl group, preferably a ($C_2$-$C_8$) linear or branched alkyl group, and more preferably an ethyl group, a 2-ethylhexyl group, a n-butyl group, an isoamyl group, a n-octyl group, or an octan-2-yl group.

The compound of formula (I) may be as defined hereinabove.
The polymer composition may comprise a dielectric liquid.
The dielectric liquid may be as defined hereinabove.
The thermoplastic polymer material may be as defined hereinabove.

Process for preparing the polymer composition

According to a further aspect, the present invention relates to a process for preparing a polymer composition as defined above, characterized in that it comprises at least one step i) of mixing a thermoplastic polymer material as defined above with a dielectric liquid as defined above.
In particular, the mixing is performed according to the following substeps:

i-a) mixing a mineral oil as defined above with at least one compound comprising at least one nitrile group, preferably at least one compound of formula (I), as defined above, and optionally with at least one antioxidant as defined above, so as to form a dielectric liquid as defined above, and
i-b) mixing a thermoplastic polymer material as defined above with the dielectric liquid as obtained in the preceding substep i-a).

The thermoplastic polymer material of substep i-b) is generally in the form of polymer granules.
The mixing of substep i-a) may be performed using any machine that allows dissolution, preferably complete dissolution, of the compound comprising at least one nitrile group, preferably the compound of formula (I), and optionally of the antioxidant (especially when they are in the form of solid powders) in the mineral oil.
Substep i-a) is preferably performed at a temperature ranging from about 20 to 110°C, preferably from about 50 to 100°C, more preferably from about 70 to 95°C and even more preferably at a temperature of about 75°C, 80°C, 85°C or 90°C.
Substep i-a) generally lasts from 15 minutes to 1 hour and preferably from 20 to 30 minutes.
On conclusion of substep i-a), a stable, transparent and homogenous dielectric liquid is obtained.
The mixing of substep i-b) may be performed by mixing the dielectric liquid obtained in substep i-a) with the thermoplastic polymer material or the polymeric compounds which constitute it, especially using an internal mixer, especially with tangential rotors or with gear rotors, or a continuous mixer, especially a screw or counter-rotating twin-screw mixer or a mixer of "Buss extruder" type.
Substep i-b) may be performed by impregnating granules of a thermoplastic polymer material as defined above with the dielectric liquid, in particular by mixing the polymer granules with the dielectric liquid, heating the resulting mixture so that the granules absorb the dielectric liquid, feeding a single-screw extruder with the resulting mixture and melt-homogenizing the mixture obtained by mechanical stirring in the extruder.
In the course of substep i-b), the polymer composition may be formed, especially in the form of granules.
To do this, the temperature in the mixer is chosen to be sufficient to obtain the thermoplastic polymer material in melt form. Next, the homogeneous mixture may be granulated, via techniques that are well known to those skilled in the art. These granules can then feed an extruder to manufacture a cable as defined above according to a process as defined below.

Process for manufacturing a cable

According to a further aspect, the present invention relates to a process for manufacturing a cable as defined above, characterized in that it comprises at least one step 1) of extrusion of the polymer composition as defined above around an elongated electrically conducting element, to obtain an (extruded) covering layer surrounding said elongated electrically conducting element.
Step 1) may be performed via techniques that are well known to those skilled in the art, for example using an extruder.
A covering layer extruded around said electrically conducting element, which may or may not be in direct physical contact with said elongated electrically conducting element, is thus obtained at the extruder outlet.

The process preferably does not comprise any step of crosslinking of the covering layer obtained in step 1).

The process preferably comprises, notably before or simultaneously with step 1), at least one step i) of mixing the thermoplastic polymer material as defined above with the dielectric liquid as defined above to so as to form the polymer composition as defined above.

In particular, the mixing is performed according to the following substeps:

i-a) mixing a mineral oil as defined above with at least one compound comprising at least one nitrile group, preferably at least one compound of formula (I), as defined above, and optionally with at least one antioxidant as defined above, so as to form a dielectric liquid as defined above, and

i-b) mixing a thermoplastic polymer material as defined above with the dielectric liquid as obtained in the preceding substep i-a).

The thermoplastic polymer material of substep i-b) is generally in the form of polymer granules.

The mixing of substep i-a) may be performed using any machine that allows dissolution, preferably complete dissolution, of the compound comprising at least one nitrile group, preferably the compound of formula (I), and optionally of the antioxidant (especially when they are in the form of solid powders) in the mineral oil.

Substep i-a) is preferably performed at a temperature ranging from about 20 to 110°C, preferably from about 50 to 100°C, more preferably from about 70 to 95°C and even more preferably at a temperature of about 75°C, 80°C, 85°C or 90°C.

Substep i-a) generally lasts from 15 minutes to 1 hour and preferably from 20 to 30 minutes.

On conclusion of substep i-a), a stable, transparent and homogenous dielectric liquid is obtained.

The mixing of substep i-b) may be performed by mixing the dielectric liquid obtained in substep i-a) with the thermoplastic polymer material or the polymeric compounds which constitute it, especially using an internal mixer, especially with tangential rotors or with gear rotors, or a continuous mixer, especially a screw or counter-rotating twin-screw mixer or a mixer of "Buss extruder" type.

Substep i-b) may be performed by impregnating granules of a thermoplastic polymer material as defined above with the dielectric liquid, in particular by mixing the polymer granules with the dielectric liquid, heating the resulting mixture so that the granules absorb the dielectric liquid, feeding a single-screw extruder with the resulting mixture and melt-homogenizing the mixture obtained by mechanical stirring in the extruder.

In the course of substep i-b), the polymer composition may be formed, especially in the form of granules.

To do this, the temperature in the mixer is chosen to be sufficient to obtain the thermoplastic polymer material in melt form. Next, the homogeneous mixture may be granulated, via techniques that are well known to those skilled in the art. These granules can then feed an extruder to manufacture a cable as defined above according to a process as defined below.

Figure 1 represents a diagrammatic view in cross section of an example of a cable according to the invention.

For reasons of clarity, only the components essential for the understanding of the invention have been represented diagrammatically, this being done without observing a scale.

The medium-voltage or high-voltage cable 1, illustrated in Figure 1, comprises an elongated electrically conducting element 2, in particular made of copper or of aluminum. The electrical cable 1 additionally comprises several layers positioned successively and coaxially around this elongated electrically conducting element 2, namely: an inner semiconducting layer 3, an electrically insulating layer 4, an outer semiconducting layer 5, an earthing and/or protective metal shield 6 and an external protective cladding 7.

The electrically insulating layer 4 is a layer obtained from the polymer composition according to the invention.

Preferably, the electrically insulating layer 4 is an extruded layer.

Preferably, the electrically insulating layer 4 is a non-crosslinked layer (i.e. thermoplastic layer).

Preferably, the inner semiconducting layer 3 and the outer semiconducting layer 5 are extruded layers.

Preferably, the inner semiconducting layer 3 and the outer semiconducting layer 5 are non-crosslinked layers (i.e. thermoplastic layers).

The presence of the metal shield 6 and of the external protective cladding 7 is preferential but not essential, this cable structure being as such well known to a person skilled in the art.

EXAMPLES

Polymer compositions

Table 1 below collates polymer compositions in which the amounts of the compounds are expressed as weight percentages relative to the total weight of the polymer composition.

**TABLE 1**

| Polymer compositions | | C1 | I1 |
|---|---|---|---|
| Thermoplastic polymer material | Heterophasic propylene copolymer | 94 | 94 |
| Dielectric liquid | Mineral oil | 5.4 | 5.4 |
| | Benzophenone | 0.3 | 0 |
| | Compound comprising at least one nitrile group | 0 | 0.3 |
| | Antioxidant compound | 0.3 | 0.3 |
| TOTAL | | 100 | 100 |

Polymer composition C1 is a comparative polymer composition, and polymer composition I1 is in accordance with the present invention.

C1 corresponds to the polymer composition of the prior art WO 2017/103509 A1 in which a dielectric liquid comprising benzophenone is disclosed in order to improve the performance of the polymer composition in terms of dielectric breakdown strength values, without significantly affecting the tan $\delta$ values and therefore the dielectric losses.

Each polymer composition C1 and I1 comprises:

- 94% by weight of thermoplastic polymer material, relative to the total weight of polymer composition; and
- 6% by weight of dielectric liquid, relative to the total weight of polymer composition.

The origin of the compounds in table 1 is as follows:

- heterophasic propylene copolymer sold by the company LYONDELLBASELL under the reference HIFAX CA7441A;
- mineral oil sold by the company NYNAS under the reference BNS 28 (hydrotreated mineral oil comprising 4% of aromatic carbon atoms, 38% of naphthenic carbon atoms and 58% of paraffinic carbon atoms; pour point = - 33°C according ASTM D 97);
- benzophenone sold by the company MOELLHAUSEN;
- compound comprising at least one nitrile group: octocrylene sold by the company Sigma-Aldrich at 97% of purity (octocrylene corresponds to the compound of formula (I) wherein $R_1$ is a

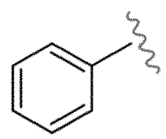

group, wherein $R_2$ is a

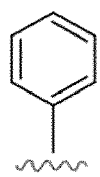

group, wherein $R_3$ is a —COOR group and wherein R is a 2-ethylhexyl group; melting point = -10°C; LogP = 6.9); and
- antioxidant compound sold by the company BASF under the reference IRGANOX B225, which comprises an equimolar mixture of IRGAFOS 168 (melting point = 180-186°C) and IRGANOX 1010 (melting point = 110-125°C).

The process used to obtain the polymer compositions C1 and I1 is as follows:

- Step 1: preparation of the dielectric liquid. First, the mineral oil is heated at 90°C during 10 min in a beaker under stirring. Then, the antioxidant compound is added in the beaker and the mixture is stirred at 90°C for 5 min. Then, the compound comprising at least one nitrile group (for I1) or benzophenone (for C1) is added in the beaker and

the mixture is stirred at 90°C for 15 min for full solubilization. We thus obtained the dielectric liquid at the end of step 1;

- Step 2: the thermoplastic polymer material pellets are weighted in a bottle of 5L and the dielectric liquid still hot obtained in step 1 is added in the bottle of 5L. The bottle of 5L containing thermoplastic polymer material pellets and the dielectric liquid is placed on rotating rollers in an oven at 60°C. The rotation of the bottle of 5L is maintained for 4 hours. Then, the bottle of 5L is stored during the night at 40°C still in the oven but without rotation. We thus obtained thermoplastic polymer material pellets impregnated with the dielectric liquid at the end of step 2; and
- Step 3: the thermoplastic polymer material pellets impregnated with the dielectric liquid obtained in step 2 are introduced in a twin screw extruder (Bertsorff ZE25A × 42D-UT) with the following temperature profile & process parameters:
    - 25°C / 145°C / 155°C / 165°C / 175°C / 175°C / 175°C / 175°C / 175°C / 175°C
    - Screw speed: 130tr/min
    - Pressure: 50 bars
    - Output : 10kgs/h

We thus obtained the polymer composition C1 or I1 at the end of step 3.

DC conductivity on plates

The DC conductivity of I1 and C1 were compared.

To do so, processed plate samples were tested for leakage current using a DC1 setup equipped with 2 ovens, each of them containing 6 testing cells. With DC1, volume conductivity of plate samples was measured according to IEC600093 or ASTM D257. In particular, samples were tested at 70°C. Steps of increased electric field from 20 to 40 $kV.mm^{-1}$ were applied. For each electric field step, current was measured for 2 to 3 days to allow samples reaching a steady state before further voltage change. For each polymer composition C1 and I1 and temperature, 2 samples were tested.

The current change over time at steady voltage and temperature was plotted. Current decreases with time is following a double exponential law:

$$i = i_{DC} + i_C \exp(-\frac{t}{\tau_C}) + i_P \exp(-\frac{t}{\tau_P})$$

The first exponential corresponds to charging current, the second one to polarization current. The time constant of the charging current $\tau_C$ is 0.2 days and that for the polarization current is 1 to 2 days. From this equation and fit, leakage current $i_C$ at steady state was calculated. Current density at steady state was then obtained by dividing this current by the surface of the BV electrode.

Figure 2 shows the current density at steady state (J) versus electric field for I1 and C1.

From Figure 2, we can see that the DC conductivity of I1 is lower than the DC conductivity of C1, which means that I1 has better electrical insulation properties compared to C1.

Relative permittivity ($\varepsilon_r$) and loss factor (tan $\delta$) measurements on plates

The relative permittivity ($\varepsilon_r$) and loss factor (tan $\delta$) measurements of I1 and C1 were compared.

Dielectric spectroscopy is a non-destructive characterization that allows monitoring the changes in relative permittivity ($\varepsilon_r$), loss factor (tan $\delta$) and AC conductivity versus frequency and temperature. The low frequency range (<10 Hz) allows for identifying ionic conduction mechanisms. It is also possible to measure the material behavior at industrial frequency range (40-60Hz).

The dielectric spectroscopy technique which was employed is based on frequency response analysis. The Frequency Response Analyzer (FRA) is constituted with:

- A sine voltage generator,
- a DC bias voltage generator,
- 2 channels for the analysis of applied and converted signal voltage.

The sample to test is forming a parallel capacitor. AC voltage is applied to this capacitor at controlled frequency and temperature. A subsequent current of same frequency is generated, with a phase shift. The voltage amplitude and phase are measured by the first channel of the FRA. The corresponding electrical scheme is presented below.

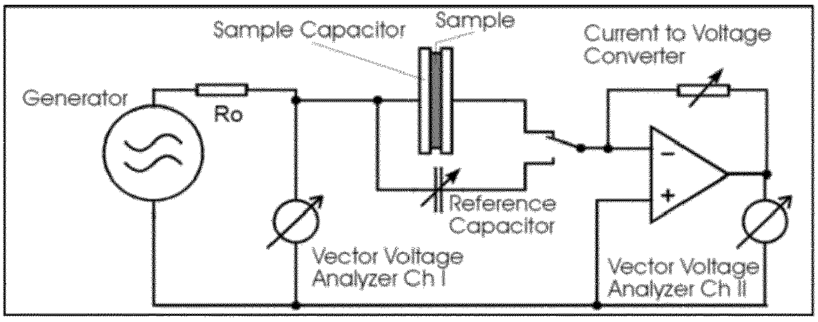


The current resulting from the sample feeds a current-to-voltage converter that consists in a rheostat. The latter transforms the current signal into a voltage signal that can be further analyzed in channel 2 of the FRA.

Measurements are performed at high voltage 1 kV for a frequency range from 1 Hz to 10 kHz. Studied temperatures are 30°C, 70°C, 90°C, 110°C and 130°C. The sample thickness is 1.5 mm.

Relative permittivity ($\varepsilon_r$) and loss factor (tan $\delta$) values under 1 kV at 50 Hz and different temperatures measured by dielectric spectroscopy are synthesized on Figure 3. Each result indicated on Figure 3 is a mean calculated from 3 measured samples.

Figure 4 shows the relative permittivity ($\varepsilon_r$) versus temperature based on the values disclosed on Figure 3. We can see that polymer compositions I1 and C1 have similar relative permittivity ($\varepsilon_r$) values at each studied temperature (i.e. non-significant differences).

Figure 5 shows the loss factor (tan $\delta$) versus temperature based on the values disclosed on Figure 3. We can see that from 30°C to 90°C, polymer compositions I1 and C1 have similar tan $\delta$ values (i.e. non-significant differences). However, when temperature is higher than 90°C, tan $\delta$ values of C1 are at least 10 times higher than tan $\delta$ values of I1, which is a significant difference. Thus, tan $\delta$ values and therefore dielectric losses of I1 are significantly lower than those obtained with the polymer composition C1 at 110°C and 130° C.

AC dielectric breakdown strength on plates

The AC dielectric breakdown strength measurements of I1 and C1 were compared.

Tests were performed in an HV3 electrical cage. Pair of half-sphere stainless steel electrodes with 20 mm diameter in circulating oil were used with the following conditions:

- Voltage: up to 130 kV, 10 mA
- Ramp: 2000 V/s
- Samples in circulating oil
- Temperature: Room Temperature (RT)
- Frequency: 50 Hz
- Samples thickness: 1.5 mm

The 2-parameters Weibull analysis were performed. The scale parameter alpha (also called 63% failure chance alpha parameter - in kV/mm) and the shape parameter beta (unitless) were thus obtained. The scale parameter alpha is the AC dielectric breakdown strength. The shape parameter beta gives an indication of data dispersion. The higher the shape parameter beta, the less dispersed the data.

Table 2 shows the scale parameter alpha, the shape parameter beta and the coefficient of determination ($R^2$) values obtained for C1 and I1. Each scale parameter alpha indicated on Table 2 is a mean calculated from 10 measured samples.

**TABLE 2**

| | C1 | I1 |
|---|---|---|
| Scale parameter: alpha (kV/mm) | 37.9 | 39.5 |
| Shape parameter: beta | 47 | 54 |
| Coefficient of determination: $R^2$ | 0.90 | 0.95 |

From Table 2, we can see that I1 has a higher AC dielectric strength (up to 39.5 kV/mm at room temperature) and a lower dispersion compared to C1.

DC dielectric breakdown strength on plates

The DC dielectric breakdown strength measurements of I1 and C1 were compared.
Samples were molded in 21 cm round plates, 0.7 mm thickness. 10 plates or more were tested.
A test cell with semispherical electrodes was designed. The test cell was submerged in a dielectric oil bath, heated at 70 °C with a Lauda pump. An upper electrode was connected to DC high voltage source. A lower electrode was connected to the ground. Plate samples were placed between the two electrodes.
The plates were submitted to a step-by-step increasing voltage until breakdown as follows:

- Starting voltage: -50 kV
- 5 kV every 30 min

All data were recorded in one file with a 30 s sampling frequency. From the breakdown population, raw dielectric strength data were used for 2-parameter Weibull analysis, extracting the scale parameter alpha (also called 63% failure chance alpha parameter - in kV/mm) and the shape parameter beta (unitless).
Table 3 shows the scale parameter alpha, the shape parameter beta and the coefficient of determination ($R^2$) values obtained for C1 and I1. Each scale parameter alpha indicated on Table 3 is a mean calculated from 10 measured samples.

**TABLE 3**

| | C1 | I1 |
|---|---|---|
| Scale parameter: alpha (kV/mm) | 92 | 106 |
| Shape parameter: beta | 12 | 40 |
| Coefficient of determination: $R^2$ | 0.99 | 0.96 |

From Table 3, we can see that I1 has a higher DC dielectric strength (up to 106 kV/mm at 70°C) and a lower dispersion compared to C1.
The polymer composition I1 according to the present invention is particularly suitable for preparing a covering layer, in particular an electrically insulating layer, of a cable, in particular a medium or high voltage cable.
Indeed, the polymer composition I1 according to the present invention may be extruded around an elongated electrically conducting element of a cable, to obtain an (extruded) covering layer surrounding said elongated electrically conducting element.

## Claims

1. Cable comprising at least one elongated electrically conducting element and at least one covering layer obtained from a polymer composition, wherein the polymer composition comprises at least one thermoplastic polymer material and at least one compound comprising at least one nitrile group.

2. Cable according to claim 1, wherein the compound comprising at least one nitrile group is a compound of formula (I):

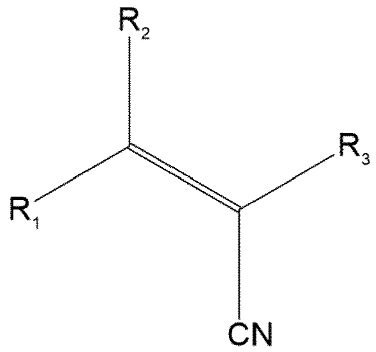

(I)

wherein $R_1$ is

a

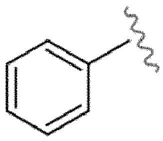

group,
a

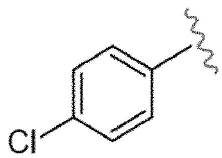

group,
a

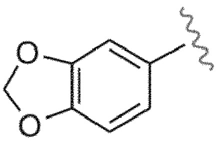

group,
a

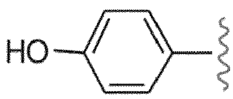

group,
a

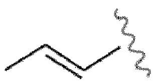

group,
a

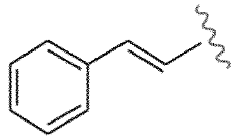

group,

a

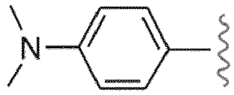

group,

a

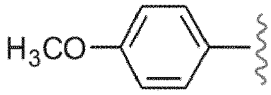

group,

a

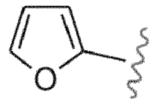

group, or

a

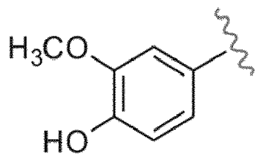

group;

wherein $R_2$ is

a

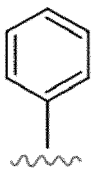

group, or a hydrogen atom; and

wherein $R_3$ is

a

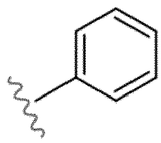

group,
a -CN group,
a hydrogen atom, or
a —COOR group, wherein R is a ($C_1$-$C_{10}$) linear or branched alkyl group, preferably a ($C_2$-$C_8$) linear or branched alkyl group, and more preferably an ethyl group, a 2-ethylhexyl group, a n-butyl group, an isoamyl group, a n-octyl group, or an octan-2-yl group.

**3.** Cable according to claim 2, wherein $R_3$ is a —COOR group, wherein R is a ($C_1$-$C_{10}$) linear or branched alkyl group.

**4.** Cable according to claim 3, wherein R is a ($C_2$-$C_8$) linear or branched alkyl group.

**5.** Cable according to claim 4, wherein R is an ethyl group, a 2-ethylhexyl group, a n-butyl group, an isoamyl group, a n-octyl group, or an octan-2-yl group.

**6.** Cable according to claim 5, wherein the compound of formula (I) is selected from:

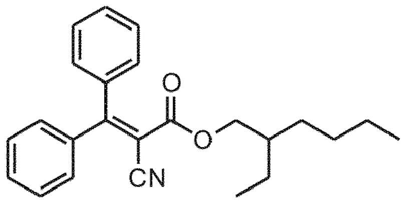

;

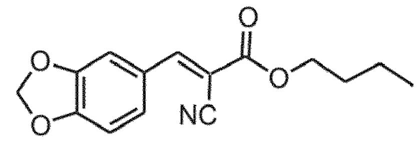

;

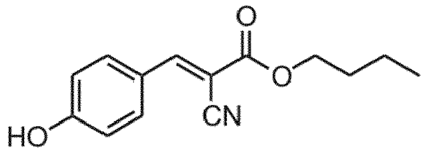

;

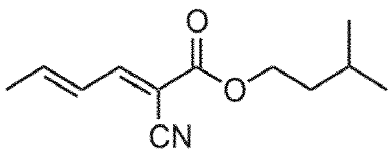

;

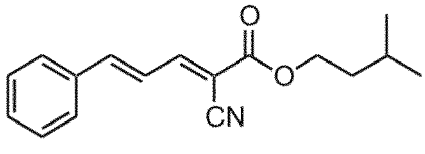

;

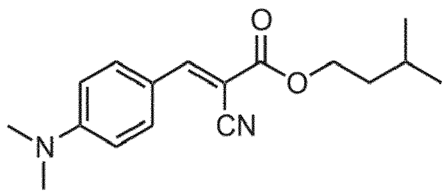

;

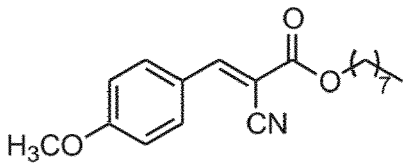

;

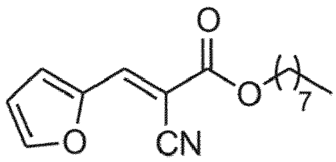

;

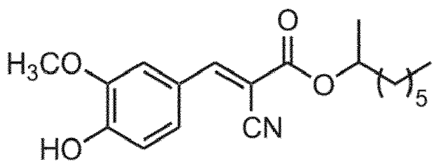

;

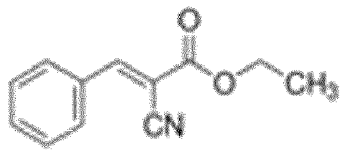

;

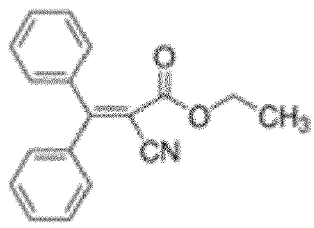

;

and
mixtures thereof.

**7.** Cable according to claim 2, wherein the compound of formula (I) is selected from:

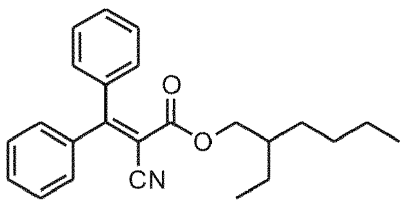

;

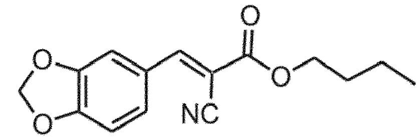

;

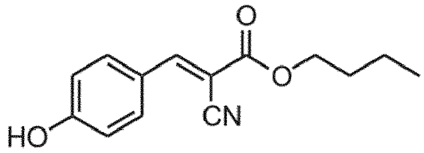

;

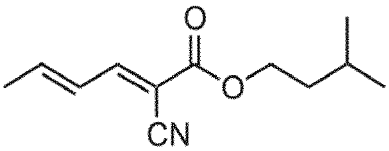

;

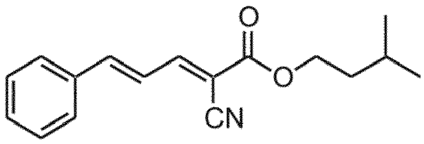

;

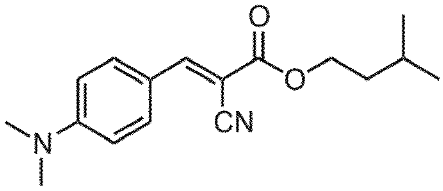

;

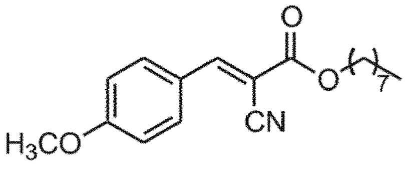

;

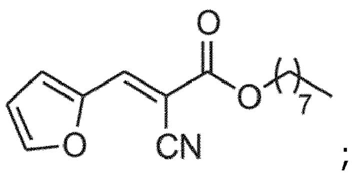

;

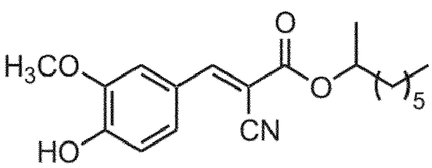

;

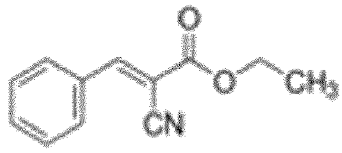

;

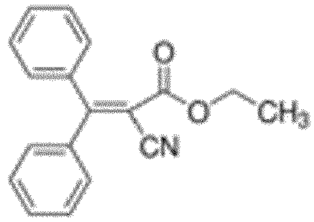

;

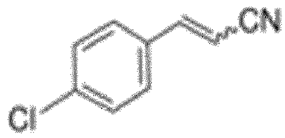

;

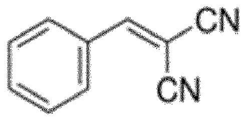

;

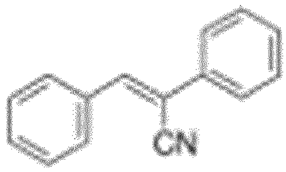

;

and
mixtures thereof.

**8.** Cable according to any one of the preceding claims, wherein the compound comprising at least one nitrile group, notably the compound of formula (I), has a melting point or a pour point lower than or equal to 140°C, preferably lower than or equal to 130°C, more preferably lower than or equal to 120°C and even more preferably lower than or equal to 110°C.

**9.** Cable according to any one of the preceding claims, wherein the compound comprising at least one nitrile group, notably the compound of formula (I), has a LogP value higher than or equal to 2.5, preferably higher than or equal to 3, more preferably higher than or equal to 3.5, and even more preferably higher than or equal to 4.

**10.** Cable according to any one of the preceding claims, wherein the polymer composition comprises a dielectric liquid, wherein the dielectric liquid comprises the compound comprising at least one nitrile group, notably the compound of formula (I).

**11.** Cable according to claim 10, wherein the dielectric liquid comprises at least one mineral oil.

**12.** Cable according to claim 11, wherein the mineral oil is selected from naphthenic oils, paraffinic oils and mixtures thereof, preferably selected from hydrotreated naphthenic oils, hydrotreated paraffinic oils and mixtures thereof.

**13.** Cable according to claim 11 or 12, wherein the dielectric liquid comprises at least 70% by weight of mineral oil, preferably at least 75% by weight of mineral oil, more preferably at least 80% by weight of mineral oil, and even

more preferably at least 85% by weight of mineral oil, relative to the total weight of the dielectric liquid.

**14.** Cable according to any one of claims 10 to 13, wherein the dielectric liquid comprises at least 2% by weight, preferably at least 2.5% by weight of, more preferably at least 3% by weight, even more preferably at least 3.5% by weight, of the compound comprising at least one nitrile group, notably the compound of formula (I), relative to the total weight of the dielectric liquid.

**15.** Cable according to any one of claims 10 to 14, wherein the ratio of the number of aromatic carbon atoms with respect to the total number of carbon atoms in the dielectric liquid is lower than 0.6, preferably lower than 0.3.

**16.** Cable according to any one of claims 10 to 15, wherein the dielectric liquid represents from 1% to 20% by weight, preferably from 2% to 15% by weight, more preferably from 3% to 12% by weight, and even more preferably from 3% to 9% by weight, relative to the total weight of the polymer composition.

**17.** Cable according to any one of the preceding claims, wherein the thermoplastic polymer material is a polypropylene-based thermoplastic polymer material.

**18.** Cable according to claim 17, wherein the polypropylene-based thermoplastic polymer material comprises:

- two propylene copolymers P1, such as a random propylene copolymer and a heterophasic propylene copolymer, or two different heterophasic propylene copolymers; and
- an olefin homopolymer or copolymer P2, such as an ethylene polymer, preferably a linear low-density polyethylene.

**19.** Cable according to any one of the preceding claims, wherein the thermoplastic polymer material represents from 80% to 99% by weight, preferably from 85% to 98% by weight, more preferably from 88% to 97% by weight, and even more preferably from 91% to 97% by weight, relative to the total weight of the polymer composition.

**20.** Cable according to any one of the preceding claims, wherein the covering layer is an extruded layer.

**21.** Cable according to any one of the preceding claims, wherein the covering layer is a non-crosslinked layer.

**22.** Cable according to any one of the preceding claims, wherein the covering layer is an electrically insulating layer.

**23.** Cable according to any one of the preceding claims, wherein the covering layer surrounds the elongated electrically conducting element.

**24.** Cable according to any one of the preceding claims, wherein the cable is a medium or high voltage cable.

**25.** Cable according to any one of the preceding claims, wherein the cable comprises an inner semiconducting layer surrounding the elongated electrically conducting element, an electrically insulating layer surrounding the inner semiconducting layer and an outer semiconducting layer surrounding the electrically insulating layer, wherein the covering layer is the electrically insulating layer.

**26.** Polymer composition comprising at least one thermoplastic polymer material and at least one compound comprising at least one nitrile group.

**27.** Polymer composition according to claim 26, wherein the compound comprising at least one nitrile group is defined according to any one of claims 2 to 9.

**28.** Polymer composition according to claim 26 or 27, wherein the polymer composition comprises a dielectric liquid, wherein the dielectric liquid is defined according to any one of claims 10 to 16.

**29.** Polymer composition according to any one of claims 26 to 28, wherein the thermoplastic polymer material is defined according to any one of claims 17 to 19.

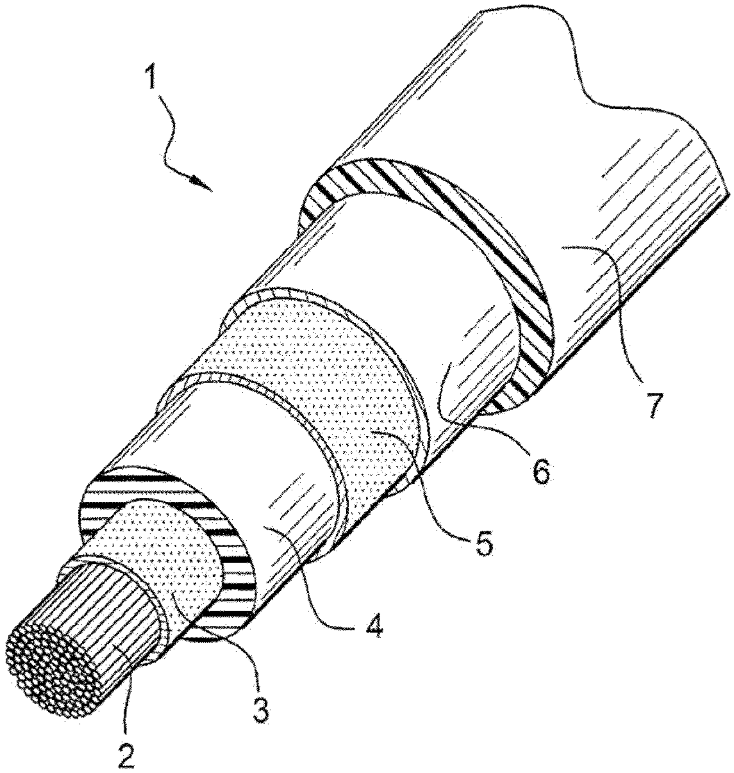


**Figure 1**

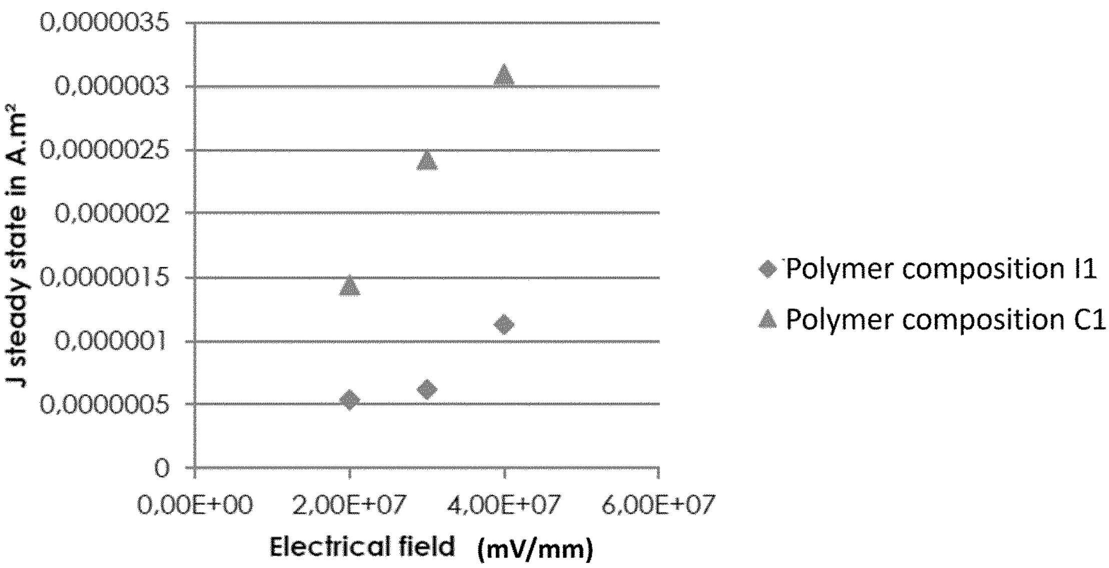


**Figure 2**

| | temperature | 30 °C | | 70 °C | | 90 °C | | 110 °C | | 130 °C | |
|---|---|---|---|---|---|---|---|---|---|---|---|
| composition | | εr | tan δ | εr | tan δ | εr | tan δ | εr | tan δ | εr | tan δ |
| C1 | | 2,03 | 2,70E-04 | 1,96 | 2,62E-04 | 1,92 | 5,39E-04 | 1,89 | 4,35E-03 | 1,86 | 2,85E-02 |
| I1 | | 2,08 | 7,00E-04 | 1,99 | 3,23E-04 | 1,96 | 2,54E-04 | 1,91 | 5,16E-04 | 1,87 | 9,56E-04 |

**Figure 3**

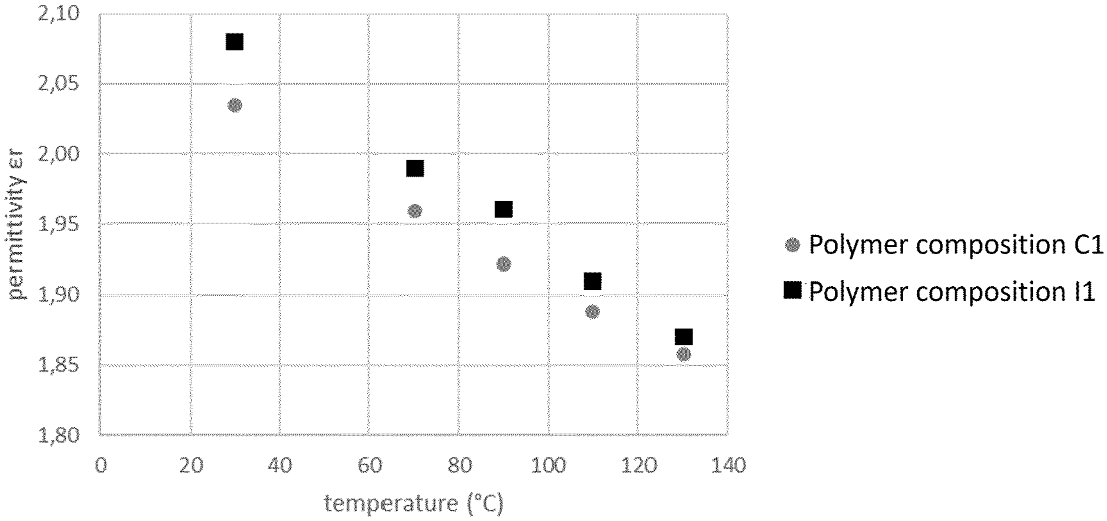


**Figure 4**

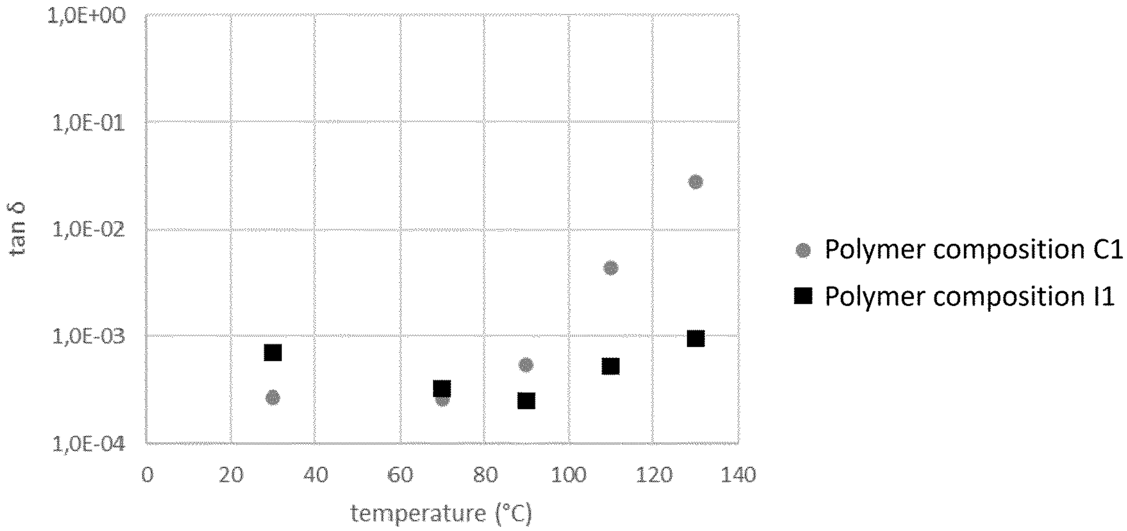


**Figure 5**

Europäisches Patentamt
European Patent Office
Office européen des brevets

# EUROPEAN SEARCH REPORT

Application Number
EP 22 30 7031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | WO 2019/053562 A1 (SABIC GLOBAL TECHNOLOGIES BV [NL]) 21 March 2019 (2019-03-21)<br>* paragraph [0055] - paragraph [0055]; claims 1-20; examples 2, 5, 6, 12; table 5 * | 1-11,17, 20-29<br><br><br>12-16, 18,19 | INV.<br>H01B3/44<br>C08K5/315<br>H01B3/22<br><br>ADD.<br>H01B9/00 |
| X<br><br><br>A | WO 2010/036642 A1 (DOW GLOBAL TECHNOLOGIES INC [US]; STOLZ-DUNN SANDRA K [US]) 1 April 2010 (2010-04-01)<br>* claims 1-6; tables 3-4, 6-7 * | 26,27,29<br><br><br>1-25,28 | |
| A,D | WO 2017/103509 A1 (NEXANS [FR]) 22 June 2017 (2017-06-22)<br>* the whole document * | 1-29 | |
| A | WO 2016/005791 A1 (PRYSMIAN SPA [IT]) 14 January 2016 (2016-01-14)<br>* the whole document * | 1-29 | |

| TECHNICAL FIELDS SEARCHED (IPC) |
|---|
| H01B<br>C08K |

The present search report has been drawn up for all claims

1

| Place of search | Date of completion of the search | Examiner |
|---|---|---|
| Munich | 24 April 2023 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 30 7031

This annex lists the patent family members relating to the patent documents cited in the above-mentioned European search report. The members are as contained in the European Patent Office EDP file on
The European Patent Office is in no way liable for these particulars which are merely given for the purpose of information.

24-04-2023

| Patent document cited in search report | Publication date | Patent family member(s) | Publication date |
|---|---|---|---|
| WO 2019053562 A1 | 21-03-2019 | CN 111065688 A | 24-04-2020 |
| | | EP 3504275 A1 | 03-07-2019 |
| | | US 2020190322 A1 | 18-06-2020 |
| | | WO 2019053562 A1 | 21-03-2019 |
| WO 2010036642 A1 | 01-04-2010 | BR PI0913756 A2 | 20-10-2015 |
| | | CN 102216337 A | 12-10-2011 |
| | | EP 2328938 A1 | 08-06-2011 |
| | | ES 2538138 T3 | 17-06-2015 |
| | | JP 2012503682 A | 09-02-2012 |
| | | KR 20110063681 A | 13-06-2011 |
| | | RU 2011116235 A | 27-10-2012 |
| | | US 2011172368 A1 | 14-07-2011 |
| | | WO 2010036642 A1 | 01-04-2010 |
| WO 2017103509 A1 | 22-06-2017 | AU 2016373304 A1 | 28-06-2018 |
| | | BR 112018012276 A2 | 27-11-2018 |
| | | CA 3008329 A1 | 22-06-2017 |
| | | CL 2018001616 A1 | 07-09-2018 |
| | | CN 108699304 A | 23-10-2018 |
| | | DK 3390528 T3 | 07-06-2021 |
| | | EP 3390528 A1 | 24-10-2018 |
| | | FR 3045634 A1 | 23-06-2017 |
| | | KR 20180095597 A | 27-08-2018 |
| | | US 2018362749 A1 | 20-12-2018 |
| | | WO 2017103509 A1 | 22-06-2017 |
| WO 2016005791 A1 | 14-01-2016 | AR 101118 A1 | 23-11-2016 |
| | | WO 2016005791 A1 | 14-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0203398 A1
- WO 2004066318 A1
- WO 2017103509 A1